(19) Europäisches Patentamt
European Patent Office
Office européen des brevets

(11) **EP 4 038 368 B1**

(12) **EUROPÄISCHE PATENTSCHRIFT**

(45) Veröffentlichungstag und Bekanntmachung des Hinweises auf die Patenterteilung:
**26.07.2023 Patentblatt 2023/30**

(21) Anmeldenummer: **20781448.4**

(22) Anmeldetag: **21.09.2020**

(51) Internationale Patentklassifikation (IPC):
**G01N 21/03** *(2006.01)* **G01N 21/39** *(2006.01)*

(52) Gemeinsame Patentklassifikation (CPC):
**G01N 21/031; G01N 21/0303;** G01N 2021/399

(86) Internationale Anmeldenummer:
**PCT/EP2020/076324**

(87) Internationale Veröffentlichungsnummer:
**WO 2021/058439 (01.04.2021 Gazette 2021/13)**

(54) **GASZELLE**

GAS CELL

CELLULE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2019 DE 102019006763**

(43) Veröffentlichungstag der Anmeldung:
**10.08.2022 Patentblatt 2022/32**

(73) Patentinhaber: **Mettler-Toledo GmbH 8606 Greifensee (CH)**

(72) Erfinder:
• **BERGSTROEM, Pär Wilhelm**
**8706 Meilen (CH)**
• **TAZREITER, Martin**
**8405 Winterthur (CH)**
• **KONDZIELLA, Ralph**
**75334 Straubenhardt (DE)**
• **VENTURINI, Francesca**
**8600 Dübendorf (CH)**
• **HERTEL, Martin**
**79585 Steinen (DE)**

(74) Vertreter: **Mettler-Toledo IP Department Im Langacher 44 8606 Greifensee (CH)**

(56) Entgegenhaltungen:
**EP-A1- 2 520 924 GB-A- 2 568 311**

• **VENTURINI F ET AL: "Characterization of strongly scattering nanoporous materials as miniaturized multipass cell for tunable diode laser absorption spectroscopy", APPLIED PHYSICS B: LASERS AND OPTICS, SPRINGER INTERNATIONAL, BERLIN, DE, Bd. 123, Nr. 4, 10. April 2017 (2017-04-10), Seiten 1-8, XP036240856, ISSN: 0946-2171, DOI: 10.1007/S00340-017-6705-Z [gefunden am 2017-04-10]**

EP 4 038 368 B1

**Beschreibung**

Die Erfindung betrifft eine Gaszelle für die spektroskopische, insbesondere absorptionsspektroskopische, Analyse eines Gases, bei der das Gas einem eintretenden Strahlenbündel elektromagnetischer Strahlung ausgesetzt wird und ein von dem Gas austretendes Strahlenbündel elektromagnetischer Strahlung zur Bildung eines Messsignals erfasst wird, wobei die Gaszelle einen Körper aus einem porösen, die elektromagnetische Strahlung streuenden Werkstoff und eine Einkoppeleinrichtung zum Einkoppeln des eintretenden Strahlenbündels in die Gaszelle und eine Auskoppeleinrichtung zum Auskoppeln des austretenden Strahlenbündels aus der Gaszelle aufweist.

Mittels der spektroskopischen Analyse von Gasen, wie beispielsweise der Absorptionsspektroskopie oder der Ramanspektroskopie können kennzeichnende Eigenschaften, insbesondere die Gaskonzentration bestimmt werden. Dies hat weitreichende Anwendungen, beispielsweise in industriellen Prozessen oder bei der Beobachtung von Umweltveränderungen.

Die Absorptionsspektroskopie beruht auf der Messung der Absorption, die ein eintretendes Strahlenbündel elektromagnetischer Strahlung beim Durchgang durch ein Gas erfährt. Wenn die Frequenz der elektromagnetischen Strahlung mit einer Resonanzfrequenz des Gases übereinstimmt, so kommt es zu einer Absorption der elektromagnetischen Strahlung, welche durch eine Abschwächung der Intensität des austretenden Strahlenbündels nachweisbar ist. Als Quelle der Strahlung eignen sich insbesondere Laser, die in einem vorgegebenen Frequenzbereich durchstimmbar sind. Die Absorption ist dann durch eine Verringerung der Intensität des austretenden Strahlenbündels bei den entsprechenden Resonanzfrequenzen des Gases detektierbar.

Die Grundlage der Absorptionsspektroskopie bildet das Lambert-Beersche Gesetz. Für ein auf ein Gas bekannter Temperatur einfallendes Strahlenbündel der Intensität $I_0$ ist die Intensität I der durch das Gas transmittierten Strahlung durch folgende Beziehung gegeben:

$$I = I_0 \cdot e^{-\alpha \cdot z}.$$

Dabei bezeichnet z die optische Weglänge, d.h. die Weglänge, welche die Strahlung in dem Gas zurückgelegt hat. $\alpha$ bezeichnet den Absorptionskoeffizienten, $\alpha = c \cdot \varepsilon$, wobei $\varepsilon$ den Extinktionskoeffizienten bezeichnet und c die Konzentration des Gases ist. Somit lässt sich bei bekanntem Extinktionskoeffizienten und bekannter optischer Weglänge die Konzentration c des Gases bestimmen.

Eine spezielle Technik im Rahmen der Absorptionsspektroskopie ist die sogenannte Absorptionsspektroskopie mittels durchstimmbarer Laserdioden, auch als TDLAS (tunable diode laser absorption spectroscopy) bezeichnet. Die Quelle der Laserstrahlung ist hierbei eine Laserdiode. Die Laserstrahlung wird über typische Absorptionslinien des Gases durchgestimmt und die Verringerung der Intensität des austretenden Strahlenbündels mittels eines Detektors gemessen. Die TDLAS erlaubt die Messung sehr geringer Gaskonzentrationen.

Aus der oben angegebenen Formel ist ersichtlich, dass die Nachweisempfindlichkeit absorptionsspektroskopischer Verfahren zur Bestimmung der Gaskonzentration von der optischen Weglänge abhängig ist. Es ist somit ein Ziel, die optische Weglänge bei absorptionsspektroskopischen Verfahren zu verlängern, um dadurch eine Verbesserung der Nachweisempfindlichkeit zu erreichen.

Eine bekannte Methode zur Verlängerung der optischen Weglänge besteht in der Verwendung sogenannter Multipass-Gaszellen. Dabei wird die elektromagnetische Strahlung mehrfach durch das zu untersuchende Gas hindurchgeführt. Bekannte Beispiele von Multipass-Gaszellen sind u.a. die White-Gaszelle oder die Herriott-Gaszelle. Die erreichbare optische Weglänge ist dabei proportional zum Gaszellenvolumen (definiert als das von der äusseren Oberfläche des Körpers der Gaszelle eingeschlossene Volumen), und es können Verhältnisse von optischer Weglänge $L_O$ zu Gaszellenvolumen V von $Lo/V = 7{,}5 \cdot 10^2 m^2$ für die White-Gaszelle und $L_O/V = 3 \cdot 10^4 m^{-2}$ für die Herriott-Gaszelle erreicht werden. Für eine optische Weglängenverlängerung im Bereich von mehreren Metern ist somit ein relativ grosses Gaszellenvolumen erforderlich. Die Verwendung von Gaszellen mit grossem Gaszellenvolumen ist jedoch in gewissen Anwendungsfällen nicht möglich. Auch die mit dem Gaszellenvolumen zunehmende Ansprechzeit der Gaszelle ist für die Anwendung nachteilig.

Die Nachweisempfindlichkeit von Multipass-Gaszellen wird ausserdem durch Interferenzeffekte begrenzt, die durch die Bildung von Fabry-Perot Etalons zwischen reflektierenden oder streuenden Oberflächen der Multipass-Gaszellen, beispielsweise Spiegel, Linsen, etc. bedingt sind. Zur Verringerung der Interferenzeffekte werden den Gaszellen weitere optische Komponenten hinzugefügt. Diese führen jedoch zu einer diffusen Reflexion der elektromagnetischen Strahlung, was eine Speckle-Bildung zur Folge hat.

Zur Lösung dieser Probleme wurde die Verwendung einer sogenannten Ulbricht-Kugel für die Absorptionsspektroskopie vorgeschlagen (siehe z.B. J. Hodgkinson et al., Applied Optics Vol. 48, No. 30, 2009). Dabei ist in einem Körper ein kugelförmiger Hohlraum ausgebildet, in den das Messgas eingeführt wird. Die Oberfläche des Hohlraums ist für die verwendete Strahlung reflektierend. Die optische Weglänge in der Hohlkugel kann dann durch die Beziehung $\frac{4}{3}\frac{R}{1-\rho}$ angenähert werden, wobei R der Radius der Hohlkugel ist und $\rho$ die Reflektivität an der inneren Oberfläche der Hohlkugel bezeichnet. Da die optische Weglänge linear vom Radius der Hohlkugel abhängt, ist die Verwendung von Hohlkugeln mit einem grossen Radius erforderlich, was für gewisse Anwendungen nachteilig sein kann. Ein weiteres Problem der Ulbricht-Kugel ist der Gasaustausch. Das Gas muss in den Hohlraum eingebracht werden, und das Vorsehen einer Zu- und Abflussvorrichtung verschlechtert die erreichbare optische Weglänge.

Eine andere Möglichkeit zur Verlängerung der optischen Weglänge wird durch das sogenannte GASMAS-Verfahren (gas in scattering media absorption spectroscopy) bereitgestellt (M. Sjöholm et al., Optics Letters Vol. 26, 16-18, 2001). Dieses Verfahren basiert auf der Verwendung poröser Werkstoffe zur Weglängenverlängerung. Ein poröser Werkstoff wird von einem zu vermessenden Gas durchdrungen. Der Werkstoff wird derart gewählt, dass er für die Absorptionswellenlänge des Gases stark streuend ist und eine geringe Absorption aufweist. Die auf den Werkstoff auffallende elektromagnetische Strahlung wird dann innerhalb des porösen Werkstoffs sehr oft an den Poren gestreut (Mehrfachstreuung), wodurch eine optische Weglänge erreicht werden kann, die einem Vielfachen der Dicke des porösen Werkstoffs entspricht. Weitere Möglichkeiten der Anwendung von GASMAS-Verfahren sind beispielsweise in L. Mei et al. "Pathlength Determination for Gas in Scattering Media Absorption Spectroscopy", Sensors 2014; 14 (3): 3871 - 3890 offenbart und umfassen die Verwendung makroskopisch homogen poröser Medien und inhomogen poröser Medien, bei denen eine oder mehrere grössere Kavitäten in einem porenfreien, streuenden Matrixmaterial ausgebildet sind. Die WO 2018/210583 A1 offenbart die Verwendung einer porösen Keramik für eine Gaszelle.

GASMAS wurde in der Vergangenheit bereits mit TDLAS kombiniert, um eine absorptionsspektroskopische Analyse von Gasen in porösen Werkstoffen durchzuführen und dadurch eine Verbesserung der Nachweisempfindlichkeit zu erreichen. Die Nachweisempfindlichkeit wird hier jedoch durch optisches Interferenzrauschen begrenzt. Zur Lösung dieser Probleme wurde sogenanntes laser beam dithering vorgeschlagen, welches jedoch die Bewegung optischer Komponenten erfordert, was in kommerziellen Zellen schlecht realisierbar ist. Die WO 2018/210583 A1 schlägt alternativ die Verwendung eines aufgeweiteten, unfokussierten Laserstrahls vor, der auf eine Gaszelle fällt, welche poröses Material aufweist. Dies führt zu einer Aufhebung der Interferenzeffekte.

Bei der bisherigen Verwendung poröser Werkstoffe für die Absorptionsspektroskopie erhält man eine optische Weglänge, die mit der Dicke der verwendeten porösen Schicht zunimmt. Jedoch nimmt die Intensität der transmittierten Strahlung mit der Schichtdicke ab, so dass die Schichtdicke nur so lange erhöht werden kann, bis die Intensität des austretenden Strahlenbündels auf ein zu ihrer Detektion notwendiges Minimum abgefallen ist. Dieser Effekt und die Masse der Gaszelle begrenzen somit die maximal erreichbare optische Weglänge.

Die EP 2 520 924 A1 offenbart eine Gaszelle für die absorptionsspektroskopische Analyse eines Gases, bei der das Gas einem eintretenden Strahlenbündel elektromagnetischer Strahlung ausgesetzt wird und ein von dem Gas austretendes Strahlenbündel elektromagnetischer Strahlung zur Bildung eines Messsignals erfasst wird. Die Gaszelle weist einen Körper aus einem porösen, die elektromagnetische Strahlung streuenden Werkstoff auf. Alternativ zum porösem Körper kann die Gaszelle als stark reflektierender Hohlkörper (Ulbrichtkugel) ausgebildet sein.

Auch die US 4,709,150 A offenbart ein Gasmesssystem.

Angesichts der genannten Probleme im Stand der Technik ist es die Aufgabe der vorliegenden Erfindung, eine Gaszelle der eingangs erwähnten Art derart weiterzuentwickeln, so dass eine hohe Nachweisempfindlichkeit bei gleichzeitig kompakter Bauweise der Gaszelle erreicht wird.

Diese Aufgabe wird erfindungsgemäss durch eine Gaszelle gemäß Anspruch 1 gelöst.

Die Erfindung beruht auf der Erkenntnis, dass eine solche Gaszelle gegenüber herkömmlichen Gaszellen ein erheblich grösseres Verhältnis von optischer Weglänge zu Gaszellenvolumen bereitstellt. Das Gaszellenvolumen ist dabei als das von einer äusseren Oberfläche des Körpers der Gaszelle umschlossene Volumen definiert.

Das grosse Verhältnis von optischer Weglänge zu Gaszellenvolumen ist dabei sowohl durch die diffuse Reflexion der Strahlung an der inneren Oberfläche der Kavität als auch durch die Transmission der Strahlung in den die Strahlung streuenden porösen Werkstoff bedingt. Das Zusammenspiel der beiden Effekte kann wie folgt verstanden werden:

Ein mittels der Einkoppeleinrichtung in die Gaszelle einkoppelbares Strahlenbündel elektromagnetischer Strahlung tritt in die Kavität ein. Das eintretende Strahlenbündel kann konvergent, divergent oder zylindrisch sein. Das Strahlenbündel trifft auf einen Bereich der inneren Oberfläche der Kavität und wird zu einem Anteil an der Oberfläche diffus reflektiert und zu einem Anteil in den porösen Werkstoff transmittiert. Der diffus reflektierte Anteil der Strahlung trifft auf weitere Bereiche der inneren Oberfläche der Kavität, an denen erneut eine diffuse Reflexion bzw. eine Transmission stattfindet.

Der transmittierte Anteil der Strahlung tritt in den porösen Werkstoff ein. Wie oben erläutert wurde, kommt es in dem porösen Werkstoff zu einer Mehrfachstreuung der Strahlung. Bevorzugt absorbiert der Werkstoff die Strahlung nicht oder kaum. Die in den Werkstoff transmittierte Strahlung tritt nach einer Mehrzahl von Streuungen zurück in die Kavität ein. Die transmittierte Strahlung hat dann gegenüber der an der Oberfläche reflektierten Strahlung eine zusätzliche Weglänge zurückgelegt. Ist die Strahlung wieder in die Kavität eingetreten, so trifft sie auf weitere Bereiche der inneren Oberfläche der Kavität. Dort wird die Strahlung, wie eben beschrieben wurde, zu einem Anteil reflektiert und zu einem Anteil in den porösen Werkstoff transmittiert. Dieser Prozess wiederholt sich so lange, bis die Strahlung durch die Auskoppeleinrichtung aus der Gaszelle ausgekoppelt wird.

Aufgrund der diffusen Reflexion an der inneren Oberfläche und der Streuung im porösen Werkstoff setzt sich das austretende Strahlenbündel der elektromagnetischen Strahlung aus einer Mehrzahl von Strahlen zusammen, die unterschiedliche Weglängen in dem Körper und der Kavität zurückgelegt haben. Im Mittel hat das austretende Strahlenbündel eine Weglänge L + Z zurückgelegt, wobei L der Anteil der mittleren Weglänge innerhalb der Kavität ist und Z der Anteil der mittleren Weglänge im porösen Werkstoff ist. Die mittlere Weglänge Z im porösen Werkstoff ist dabei sehr viel grösser als die mittlere Weglänge L in der Kavität.

Die oben beschriebene Gaszelle eignet sich somit sehr gut zur Verwendung bei der Absorptionsspektroskopie. Die Gaszelle wird dabei mit dem zu messenden Gas in Kontakt gebracht. Der poröse Werkstoff ist für das zu messende Gas gasdurchlässig. Das Gas dringt in den porösen Werkstoff und in die Kavität ein. Wird dann ein eintretendes Strahlenbündel in die Gaszelle eingekoppelt, so hat das austretende Strahlenbündel im Mittel die Weglänge L + Z durch das Messgas zurückgelegt. Da Z viel grösser als L ist, ist ein Grossteil der Absorbanz durch die Wechselwirkung der elektromagnetischen Strahlung mit dem Gas im porösen Werkstoff bedingt.

Die elektromagnetische Strahlung tritt mehrfach in den die Kavität umgebenden porösen Werkstoff ein, um dort mit dem Gas wechselzuwirken. Somit ist durch die erfindungsgemässe Gaszelle ein sehr grosses Verhältnis von optischer Weglänge zu Gaszellenvolumen erreichbar. Dies ermöglicht eine kompakte Bauweise bei gleichzeitig hoher Nachweisempfindlichkeit und schneller Ansprechzeit. Die hohe Nachweisempfindlichkeit beruht dabei auf der grossen erreichbaren optischen Weglänge. Die schnelle Ansprechzeit ist durch das vergleichsweise kleine Gaszellenvolumen sowie durch den Gasaustausch über die gesamte Oberfläche der Gaszelle bedingt. Die poröse Struktur erlaubt dabei einen Gasaustausch innerhalb weniger Sekunden und somit eine rasche Detektion von Konzentrationsänderungen. Eine Gaszufuhr oder Gasabfuhr mittels eines komplizierten Aufbaus aus Schläuchen und Pumpen ist dabei nicht notwendig. Durch die kompakte Bauweise weist die erfindungsgemässe Gaszelle viele Anwendungsmöglichkeiten auf und ist zudem kostengünstig herstellbar.

Wie oben erläutert wurde, wird der an der inneren Oberfläche der Kavität reflektierte Anteil der elektromagnetischen Strahlung bei einem erneuten Auftreffen auf die innere Oberfläche der Kavität teilweise in den porösen Werkstoff eintreten. Dadurch werden die bei herkömmlichen GASMAS-Verfahren auftretenden Intensitätsverluste des austretenden Strahlenbündels, welche durch eine Reflexion an der Eintrittsseite des Strahlenbündels bedingt sind, vermieden.

Aufgrund der diffusen Streuung der Strahlung an der Oberfläche der Kavität und im porösen Werkstoff wird zudem die Bildung von Interferenzeffekten vermieden. Dadurch wird die Nachweisempfindlichkeit der Gaszelle weiter verbessert.

Ein weiterer Vorteil der erfindungsgemässen Gaszelle besteht darin, dass der poröse Werkstoff als Barriere wirkt, welche das Eintreten von grösseren Molekülen in die Kavität oder in den porösen Werkstoff selbst verhindert. Nur Moleküle, welche eine Grösse aufweisen, die geringer ist als die Grösse der Poren, können in den nanoporösen Werkstoff eindringen bzw. durch diesen hindurchdringen und in die Kavität gelangen. Der poröse Werkstoff wirkt somit als Filter oder als Membran. Das Innere der Kavität wird dadurch vor Verschmutzung geschützt und bleibt sauber.

Darüber hinaus wirkt der die Kavität umschliessende Werkstoff als eine Flammensperre. Denn zum einen ist der poröse Werkstoff selbst nicht so leicht entflammbar. Zum anderen kann aufgrund der Mehrfachreflexionen in der Gaszelle insgesamt mit weniger Ausgangsleistung gemessen werden, so dass ein Aufheizen der Gaszelle durch das eintretende Strahlenbündel verhindert oder zumindest stark reduziert werden kann. Falls es trotz allem zu einer Zündung in der Kavität kommen sollte, treten keine Flammen aus der Gaszelle aus, da sich das Gas bereits vorher zu stark abgekühlt hat. Es können daher höhere optische Leistungen ermöglicht werden, wobei die Gaszelle gleichzeitig den Erfordernissen der ATEX- und/oder FM-Richtlinie zum Explosionsschutz genügen kann.

Gemäss einer Ausführungsform der Erfindung weist der Werkstoff einen porösen keramischen Werkstoff auf, in dem die Kavität ausgebildet ist. Die optimale Grösse der Poren und deren Verteilung wird dabei experimentell ermittelt und hängt von der für das zu untersuchende Gas verwendeten Wellenlänge sowie von dem verwendeten Keramikwerkstoff ab. Für Strahlung im mittleren Infrarotbereich ist eine Porengrösse von 20 nm bis 10 $\mu$m vorteilhaft. Beispielsweise kann für eine Wellenlänge von 760 nm eine Porengrösse von 100 bis 300 nm verwendet werden.

Der poröse keramische Werkstoff kann beispielsweise Zirkonoxid, Aluminiumoxid, Titanoxid, Siliziumoxid, Magnesiumoxid, Yttriumoxid, Galliumphosphit, poröses Silizium oder Mischungen daraus aufweisen.

Die Porosität des Werkstoffs kann mindestens 25%, bevorzugt mindestens 30%, weiter bevorzugt mindestens 35% und höchstens 70%, bevorzugt höchstens 65% und weiter bevorzugt höchstens 60% betragen. Wenn die Porosität weniger als 25% beträgt, so ist der Werkstoff sehr dicht, und der Effekt der Weglängenverlängerung durch Streuung an den Poren ist zu gering. Ist jedoch die Porosität grösser als 70%, so ist der poröse Werkstoff instabil und nicht zur Verwendung für den Körper einer Gaszelle geeignet.

Die Kavität kann eine beliebige Form aufweisen. In einer möglichen Ausführungsform weist die Kavität die Form einer Hohlkugel mit Radius $R_K$ auf. Die Kavität kann aber auch andere Formen aufweisen, beispielsweise die Form eines Ellipsoids.

Das Volumen und/oder die innere Oberfläche der Kavität können dabei unter Berücksichtigung des Signal-Rausch-Verhältnisses gewählt werden. Es hat sich nämlich experimentell gezeigt, dass das Signal-Rausch-Verhältnis von der Grösse des Volumens der Kavität und der inneren Oberfläche abhängt und daher durch eine geeignete Bemessung des Volumens der Kavität und/oder der inneren Oberfläche eine Verbesserung des Signal-Rausch-Verhältnisses herbeigeführt werden kann. Für den Fall, dass die Kavität die Form einer Hohlkugel aufweist, kann der Radius $R_K$ der Hohlkugel unter Berücksichtigung des Signal-Rausch-Verhältnisses gewählt werden, und der Radius $R_K$ der Hohlkugel kann bevorzugt mindestens 2 mm, weiter bevorzugt mindestens 5 mm, noch weiter bevorzugt mindestens 10 mm und noch weiter bevorzugt mindestens 15 mm betragen. Wenn der Radius der Hohlkugel zu klein gewählt wird, ist die Absorbanz zu gering, was zu einem schlechten Signal-Rausch-Verhältnis führt.

In einer Ausführungsform der Erfindung weist der Körper eine äussere Oberfläche auf, welche die innere Oberfläche der Kavität in einem Abstand umgibt, bei dem die an der äusseren Oberfläche austretende Verluststrahlung kleiner als eine vorgegebene Verlustschranke ist. Die Verlustschranke ist vorzugsweise kleiner oder gleich 99% der Intensität des eintretenden Strahlenbündels, weiter bevorzugt kleiner oder gleich 95% der Intensität des eintretenden Strahlenbündels und noch weiter bevorzugt kleiner oder gleich 90% der Intensität des eintretenden Strahlenbündels. Wie oben erläutert wurde, ist die innere Oberfläche der Kavität für die elektromagnetische Strahlung sowohl reflektierend als auch transmittierend. Die in den Werkstoff eintretende transmittierte Strahlung kann die äussere Oberfläche des Körpers erreichen und dort als Verluststrahlung aus dem Körper austreten. Wenn jedoch der Abstand zwischen der inneren Oberfläche der Kavität und der äusseren Oberfläche des Körpers gross genug gewählt wird, so erreicht nur ein geringer Anteil der in den porösen Werkstoff eingetretenen Strahlung die äussere Oberfläche. Der Rest wird durch Streuung an den Poren des Werkstoffs in die Kavität zurückgeleitet. Für einen stark streuenden Werkstoff kann ein Abstand von 3 bis 4 mm zwischen der inneren Oberfläche der Kavität und der äusseren Oberfläche des Körpers ausreichend sein, um ein Austreten von Verluststrahlung auf ein vernünftiges Mass zu begrenzen. Dadurch wird die Intensität des austretenden Strahlenbündels und somit das Signal-Rausch-Verhältnis verbessert.

Bei einer erfindungsgemässen Gaszelle kann das Verhältnis der von dem Strahlenbündel in der Gaszelle zurückgelegten optischen Weglänge $L_O$ zu dem von der äusseren Oberfläche des Körpers eingeschlossenen Gaszellenvolumen V, $L_O/V$, grösser oder gleich $10^5 \text{m}^{-2}$ sein, vorzugsweise grösser oder gleich $2 \cdot 10^5 \text{m}^{-2}$, weiter bevorzugt grösser oder gleich $3 \cdot 10^5 \text{m}^{-2}$. Beispielsweise kann für eine Gaszelle mit einem Gaszellenvolumen von $V = 4 \cdot 10^{-5} \text{m}^3$ eine optische Weglänge $L_O$ von mehr als 8 m erreicht werden. Bei einer weiteren beispielhaften Ausführungsform der Erfindung kann für eine Gaszelle mit einem Gaszellenvolumen von $V = 4{,}5 \cdot 10^{-6} \text{m}^3$ eine optische Weglänge $L_O$ von 1,4 m erreicht werden. Dies ist eine erhebliche Verbesserung gegenüber herkömmlichen Gaszellen, wie beispielsweise der White-Gaszelle und der Herriott-Gaszelle.

In einer Ausführungsform der Erfindung kann die Einkoppeleinrichtung zur divergierenden Einkopplung des eintretenden Strahlenbündels in die Kavität ausgebildet sein. Wenn ein divergentes Strahlenbündel in die Kavität eintritt, wird die Entstehung störender Interferenzeffekte weiter unterdrückt. Die Einkoppeleinrichtung und/oder die Auskoppeleinrichtung kann einen Lichtleiter aufweisen. Die divergierende Einkopplung kann dann durch die Verwendung eines Lichtleiters mit einer möglichst hohen numerischen Apertur erreicht werden. Beispielsweise kann eine Faser mit einer numerischen Apertur von 0,22 bis 0,50 verwendet werden. Zusätzlich oder alternativ kann an dem in die Gaszelle einkoppelnden Ende des Lichtleiters eine Linse angeordnet sein, welche das Strahlenbündel aufweitet.

Die Einkoppeleinrichtung kann zum Einkoppeln elektromagnetischer Strahlung des eintretenden Strahlenbündels in die Kavität ausgebildet sein. Die Einkoppeleinrichtung kann derart ausgebildet sein, dass sie die gesamte elektromagnetische Strahlung des eintretenden Strahlenbündels in die Kavität einkoppelt. Alternativ kann die Einkoppeleinrichtung derart ausgebildet sein, dass sie nur einen Anteil der elektromagnetischen Strahlung des eintretenden Strahlenbündels in die Kavität einkoppelt. Zusätzlich oder alternativ kann die Auskoppeleinrichtung zum Auskoppeln von das austretende Strahlenbündel bildender elektromagnetischer Strahlung aus der Kavität ausgebildet sein. Die Auskoppeleinrichtung kann derart ausgebildet sein, dass sie die gesamte elektromagnetische Strahlung des austretenden Strahlenbündels aus der Kavität auskoppelt. Alternativ kann die Auskoppeleinrichtung derart ausgebildet sein, dass sie nur einen Anteil der elektromagnetischen Strahlung des austretenden Strahlenbündels aus der Kavität auskoppelt. Im Falle, dass die Einkoppeleinrichtung und/oder die Auskoppeleinrichtung einen Lichtleiter aufweist, kann dieser von der äusseren Oberfläche des Körpers aus durch den Körper hindurch bis zur Kavität geführt sein. Das heisst, der Lichtleiter erstreckt sich bis zur Kavität oder in die Kavität hinein. Dies erlaubt eine besonders einfache Einkopplung und/oder Auskopplung der elektromagnetischen Strahlung in die Kavität / aus der Kavität.

In der oben erläuterten Ausführungsform schneidet der Lichtleiter die innere Oberfläche der Kavität. Dadurch wird der Bereich der inneren Oberfläche, an der die elektromagnetische Strahlung reflektiert werden kann, verringert. Da sich zudem der Lichtleiter durch den porösen Werkstoff erstreckt, kann in diesem Bereich die in den porösen Werkstoff eintretende elektromagnetische Strahlung nicht in dem porösen Werkstoff gestreut werden. Beide Effekte führen zu einer Verringerung der optischen Weglängenverlängerung. Dadurch wird die Absorbanz verringert. Andererseits erlaubt die Verwendung eines Lichtleiters mit einem grossen Querschnitt die Verbesserung des Signal-Rausch-Verhältnisses. Deswegen wird in einer Ausführungsform der Erfindung die Grösse des von der Einkoppel- und/oder Auskoppeleinrichtung in dem Körper eingenommenen Bereichs unter Berücksichtigung der Absorbanz und/oder des Signal-Rausch-Verhältnisses gewählt. Für eine Kavität mit der Form einer Hohlkugel mit Radius $R_K$ = 7 mm kann mittels einer Faser mit einem Radius von 300 $\mu$m eine sehr gute Absorbanz erreicht werden. Andererseits kann durch die Verwendung einer Faser mit einem Radius von 750 $\mu$m das Signal-Rausch-Verhältnis optimiert werden. Für eine Kavität mit einem Radius von $R_K$ = 7 mm ist eine optische Faser mit einem Radius zwischen 300 $\mu$m und 750 $\mu$m vorteilhaft.

Die Einkoppeleinrichtung kann zum Einkoppeln elektromagnetischer Strahlung des eintretenden Strahlenbündels in den den porösen Werkstoff aufweisenden Bereich des Körpers ausgebildet sein. Die Einkoppeleinrichtung kann derart ausgebildet sein, dass sie die gesamte elektromagnetische Strahlung des eintretenden Strahlenbündels in den den porösen Werkstoff aufweisenden Bereich des Körpers einkoppelt. Alternativ kann die Einkoppeleinrichtung derart ausgebildet sein, dass sie nur einen Anteil der elektromagnetischen Strahlung des eintretenden Strahlenbündels in den den porösen Werkstoff aufweisenden Bereich des Körpers einkoppelt. Zusätzlich oder alternativ kann die Auskoppeleinrichtung zum Auskoppeln von das austretende Strahlenbündel bildender elektromagnetischer Strahlung aus dem den porösen Werkstoff aufweisenden Bereich des Körpers ausgebildet sein. Die Auskoppeleinrichtung kann derart ausgebildet sein, dass sie die gesamte das austretende Strahlenbündel bildende elektromagnetische Strahlung aus dem den porösen Werkstoff aufweisenden Bereich des Körpers auskoppelt. Alternativ kann die Auskoppeleinrichtung derart ausgebildet sein, dass sie nur einen Anteil der das austretende Strahlenbündel bildenden elektromagnetischen Strahlung aus dem den porösen Werkstoff aufweisenden Bereich des Körpers auskoppelt.

Beispielsweise kann im Falle, dass die Auskoppeleinrichtung einen Lichtleiter aufweist, das Strahlung aus dem Körper auskoppelnde Ende des Lichtleiters in einem Abstand a von der inneren Oberfläche der Kavität in dem porösen Werkstoff angeordnet sein. Dadurch wird vermieden, dass das in die Kavität eintretende Strahlenbündel nach der Reflexion sofort wieder aus der Kavität ausgekoppelt wird, ohne den porösen Werkstoff durchlaufen zu haben. Denn aufgrund des Abstands zwischen der inneren Oberfläche der Kavität und dem auskoppelnden Ende der Faser durchläuft die elektromagnetische Strahlung auf jeden Fall mindestens den Abstand a, bevor sie in die Auskoppeleinrichtung eintritt. a kann beispielsweise 1 mm sein.

Die Auskoppeleinrichtung kann auch vollständig ausserhalb des Körpers angeordnet sein. Dann muss jedoch der Abstand zwischen der inneren Oberfläche der Kavität und der äusseren Oberfläche des Körpers derart gewählt sein, dass die elektromagnetische Strahlung mit ausreichender Intensität die Auskoppeleinrichtung erreichen kann. Diese Anordnung erlaubt es, die Absorbanz zu maximieren.

In einer Ausführungsform der Erfindung kann die Einkoppeleinrichtung die gesamte elektromagnetische Strahlung des eintretenden Strahlenbündels in die Kavität einkoppeln. Die Auskoppeleinrichtung kann dann derart ausgestaltet sein, dass sie die gesamte das austretende Strahlenbündel bildende elektromagnetische Strahlung aus der Kavität auskoppelt. Alternativ kann die Auskoppeleinrichtung derart ausgestaltet sein, dass sie die gesamte das austretende Strahlenbündel bildende elektromagnetische Strahlung aus dem den porösen Werkstoff aufweisenden Bereich des Körpers auskoppelt.

Die erfindungsgemässe Gaszelle kann für die absorptionsspektroskopische Analyse eines Gases verwendet werden. Dazu wird die Gaszelle mit dem zu vermessenden Gas in Kontakt gebracht. Der poröse Werkstoff ist für das zu vermessende Gas gasdurchlässig. Das Gas dringt in den porösen Werkstoff und in die Kavität ein. Koppelt man elektromagnetische Strahlung einer geeigneten Wellenlänge über die Einkoppeleinrichtung in die Gaszelle ein, so kann durch eine Messung der Intensität der durch die Auskoppeleinrichtung ausgekoppelten Strahlung mittels dem Lambert-Beerschen Gesetz (siehe oben) die Konzentration des Gases bestimmt werden. Die optische Weglänge in der Gaszelle wird dabei vorab durch Messungen mit einem Gas bekannter Konzentration bestimmt.

Weiter betrifft die Erfindung eine Anordnung für die absorptionsspektroskopische Analyse eines Gases, aufweisend:

- eine Gaszelle gemäss einem der oben genannten Aspekte;
- eine Quelle elektromagnetischer Strahlung zur Erzeugung des eintretenden Strahlenbündels;
- eine Detektoranordnung zur Erfassung des austretenden Strahlenbündels.

Die Quelle elektromagnetischer Strahlung kann eine Laserlichtquelle aufweisen. Insbesondere kann sie eine durchstimmbare Laserdiode aufweisen. Die Detektoranordnung kann einen Photodetektor aufweisen.

Die erfindungsgemässe Gaszelle sowie die erfindungsgemässe Anordnung für die absorptionsspektroskopische Analyse eines Gases kann zur Konzentrationsbestimmung eines oder mehrerer der folgenden Gase eingesetzt werden: Sauerstoff, Kohlendioxid, Kohlenmonoxid, Stickoxide, Methan, Amine, Ammoniak, Schwefelwasserstoffe, Schwefeloxide, Halogenwasserstoffverbindungen wie HCl oder HF, Wasser oder Mischungen daraus.

In der folgenden Beschreibung wird die Erfindung unter Bezugnahme auf die Zeichnungen beispielhaft erläutert. In den Zeichnungen zeigt:

Fig. 1      eine Schnittansicht einer ersten Ausführungsform einer erfindungsgemässen Gaszelle, wobei ein Teil des Strahlengangs innerhalb der Gaszelle beispielhaft dargestellt ist,

Fig. 2a     eine Schnittansicht der in Fig. 1 dargestellten Gaszelle,

Fig. 2b     eine Schnittansicht einer ersten Abwandlung der in Fig. 2a gezeigten Gaszelle,

Fig. 2c     eine Schnittansicht einer zweiten Abwandlung der in Fig. 2a gezeigten Gaszelle,

Fig. 3a     eine Schnittansicht einer zweiten Ausführungsform einer erfindungsgemässen Gaszelle,

Fig. 3b     eine Schnittansicht einer Abwandlung der in Fig. 3a gezeigten Gaszelle,

Fig. 4a     eine Schnittansicht einer dritten Ausführungsform einer erfindungsgemässen Gaszelle,

Fig. 4b     eine Schnittansicht einer Abwandlung der in Fig. 4a gezeigten Gaszelle,

Fig. 5      eine Schnittansicht von Bestandteilen einer vierten Ausführungsform einer erfindungsgemässen Gaszelle,

Fig. 6      eine Schnittansicht einer fünften Ausführungsform einer erfindungsgemässen Gaszelle.

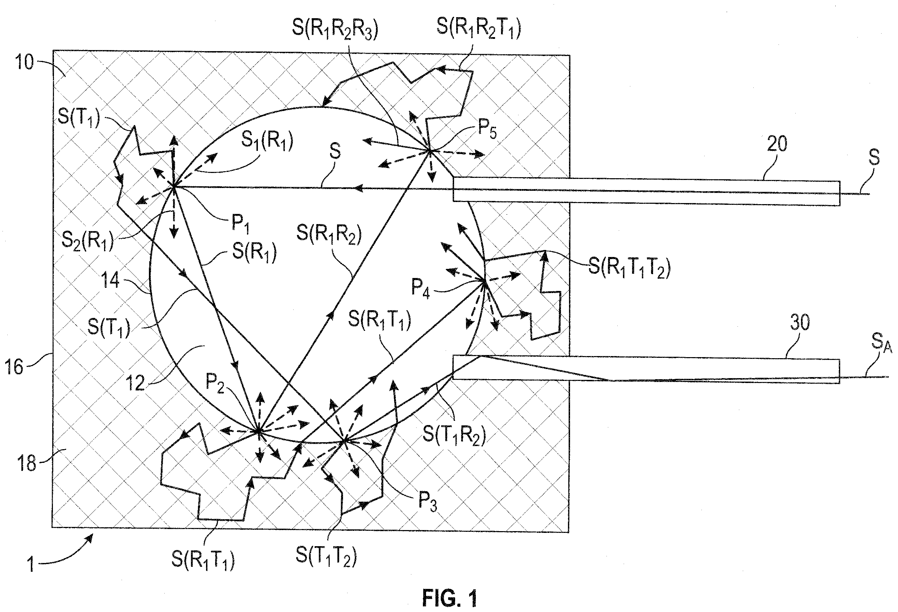

Fig. 1 ist eine Schnittansicht einer ersten Ausführungsform einer erfindungsgemässen Gaszelle 1, wobei ein Teil des Strahlengangs innerhalb der Gaszelle 1 beispielhaft dargestellt ist. Die Gaszelle 1 weist einen Körper 10 auf. Der Körper 10 kann beispielsweise quaderförmig sein. Der Körper 10 ist aus einem porösen, die elektromagnetische Strahlung streuenden Werkstoff. In dem Körper 10 ist eine werkstofffreie Kavität 12 ausgebildet. In der vorliegenden Ausführungsform weist die Kavität 12 die Form einer Hohlkugel auf. Die Kavität 12 wird durch eine innere Oberfläche 14 begrenzt. Der Körper 10 weist eine äussere Oberfläche 16 auf, welche die innere Oberfläche 14 der Kavität 12 in einem Abstand umgibt.

Die Gaszelle 1 weist weiter eine Einkoppeleinrichtung 20 zum Einkoppeln eines eintretenden Strahlenbündels S in die Gaszelle 1 auf. In der vorliegenden Ausführungsform weist die Einkoppeleinrichtung 20 einen Lichtleiter auf. Dazu ist in dem Körper 10 ein werkstofffreier Bereich vorgesehen, durch den der Lichtleiter von der Aussenseite der Gaszelle 1 aus in die Kavität 12 eingeführt werden kann. Die Einkoppeleinrichtung 20 koppelt in der vorliegenden Ausführungsform die gesamte elektromagnetische Strahlung des eintretenden Strahlenbündels in die Kavität 12 ein. Weiter weist die Gaszelle 1 eine Auskoppeleinrichtung 30 auf. In der vorliegenden Ausführungsform koppelt die Auskoppeleinrichtung 30 die gesamte das austretende Strahlenbündel $S_A$ bildende elektromagnetische Strahlung aus der Kavität aus. Weiter weist in der vorliegenden Ausführungsform die Auskoppeleinrichtung 30 einen Lichtleiter auf. In dem Körper 10 ist ein weiterer werkstofffreier Bereich vorgesehen, durch den der Lichtleiter von der Kavität 12 aus zur Aussenseite des Körpers 10 geführt werden kann.

Das Strahlenbündel wird durch den Lichtleiter der Einkoppeleinrichtung 20 von der Aussenseite des Körpers 10 aus in die Kavität 12 eingekoppelt. Die Einkoppeleinrichtung 20 kann derart ausgestaltet sein, dass das eintretende Strahlenbündel S divergierend in die Kavität 12 eingekoppelt wird. Dazu kann beispielsweise ein Lichtleiter mit einer hohen numerischen Apertur verwendet werden. Alternativ kann an dem in die Kavität 12 mündenden Ende des Lichtleiters eine Linse vorgesehen sein.

Im Folgenden wird der Strahlengang innerhalb der Gaszelle 1 erläutert. Zur Vereinfachung der Darstellung ist in allen Figuren nur der Verlauf des Hauptstrahls des Strahlenbündels (auch kurz als Strahl S bezeichnet) dargestellt.

Der in die Kavität 12 eingekoppelte Strahl S durchläuft einen Bereich der Kavität 12 und trifft dann auf einen Punkt P1 an der inneren Oberfläche 14 der Kavität 12. Erfindungsgemäss ist die innere Oberfläche 14 für die elektromagnetische Strahlung sowohl diffus reflektierend als auch transmittierend. Es wird also ein Anteil des Strahls S am Punkt P1 der inneren Oberfläche 14 der Kavität 12 diffus reflektiert, und ein Anteil der Strahlung wird am Punkt P1 der inneren Oberfläche 14 in den porösen Werkstoff transmittiert. In Fig. 1 sind beispielhaft drei reflektierte Strahlen S (R1), $S_1$ (R1) und $S_2$ (R1) dargestellt. Zur Vereinfachung der Darstellung ist jedoch nur der weitere Verlauf des reflektierenden Strahls S (R1) dargestellt. Der Verlauf der Strahlen $S_1$ (R1) und $S_2$ (R1) ist nicht weiter dargestellt, und die Strahlen sind deshalb als gestrichelte Pfeile dargestellt. Der transmittierte Anteil des Strahls S tritt in verschiedenen Richtungen in den porösen Werkstoff ein. Wie im Fall der reflektierten Strahlung wird zur Vereinfachung der Darstellung nur der Verlauf eines einzigen Strahles S (T1) dargestellt. Zur Verdeutlichung sind noch drei weitere Strahlen eingezeichnet, die am Punkt P1 in den Werkstoff eintreten. Da ihr Verlauf im Weiteren nicht weiter beschrieben wird, sind diese als gestrichelte Pfeile dargestellt. Der im porösen Werkstoff verlaufende Strahl S (T1) wird in dem porösen Werkstoff mehrfach gestreut, bevor er wieder in die Kavität 12 eintritt.

Der Verlauf des reflektierten Strahls S (R1) und des transmittierten Strahls S (T1) wird nun beschrieben. Der reflektierte Strahl S (R1) trifft an einem zweiten Punkt P2 auf die innere Oberfläche 14 der Kavität 12 auf und wird dort wiederum zu einem Teil diffus reflektiert und zu einem anderen Teil in den porösen Werkstoff transmittiert. Auch hier gibt es, wie im Falle des Punkts P1, wieder mehrere reflektierte und transmittierte Strahlen, wobei zur Vereinfachung der Darstellung jeweils nur ein reflektierter Strahl und ein transmittierter Strahl dargestellt ist. Der reflektierte Anteil S (R1, R2) verläuft weiter durch die Kavität 12, bis er auf einen Punkt P5 an der inneren Oberfläche 14 der Kavität 12 fällt. Dort wird er wieder zu einem Teil reflektiert und zu einem anderen Teil transmittiert.

Der am Punkt P1 transmittierte Strahl S (T1) verläuft nach seinem Wiedereintritt in die Kavität 12 durch diese hindurch, bis er auf einen Punkt P3 an der inneren Oberfläche 14 der Kavität 12 trifft, wo er zu einem Teil reflektiert und zu einem anderen Teil transmittiert wird. Der reflektierte Anteil S (T1, R2) tritt in den Lichtleiter der Auskoppeleinrichtung 30 ein und wird als Beitrag zum austretenden Strahlenbündel $S_A$ (es ist zur Vereinfachung nur ein Strahl $S_A$ eingezeichnet) aus der Gaszelle 1 ausgekoppelt. In ähnlicher Weise verlaufen auch die anderen Strahlen weiter durch die Kavität 12 sowie zum Teil durch den porösen Werkstoff, um schliesslich in den Lichtleiter der Auskoppeleinrichtung 30 einzutreten und aus der Gaszelle 1 ausgekoppelt zu werden.

Das austretende Strahlenbündel $S_A$ setzt sich somit aus einer Mehrzahl von austretenden Strahlen zusammen, die unterschiedliche optische Weglängen innerhalb der Gaszelle 1 zurückgelegt haben. Das austretende Strahlenbündel $S_A$ hat eine effektive Weglänge $L_{eff}$ = L + Z zurückgelegt, wobei L die effektive Weglänge innerhalb der Kavität 12 und Z die effektive Weglänge innerhalb des porösen Werkstoffs bezeichnet.

Im Folgenden wird die optische Weglängenverlängerung der in Fig. 1 gezeigten Gaszelle 1 mit der einer Ulbricht-Kugel verglichen. Bei dieser ist die innere Oberfläche nahezu vollständig reflektierend und die Kavität ist nicht von einem porösen Werkstoff umgeben, so dass die Weglängenverlängerung lediglich durch den Verlauf innerhalb der Hohlkugel bedingt ist. Für eine Hohlkugel mit Radius von 5 mm und einer Reflektivität von 0,985 beträgt die effektive Weglänge im Falle der Ulbricht-Kugel 0,44 m. Im Falle der in Fig. 1 gezeigten Ausführungsform beträgt die effektive Weglänge über 3 m. Im Falle einer Hohlkugel mit Radius von 15 mm und einer Reflektivität von 0,985 beträgt die effektive Weglänge für die Ulbricht-Kugel 1,33 m, und die effektive Weglänge für die in Fig. 1 gezeigte Gaszelle beträgt über 8 m. Das heisst, durch die erfindungsgemässe Gaszelle 1 kann die effektive Weglänge gegenüber einer Ulbricht-Kugel erheblich verlängert werden.

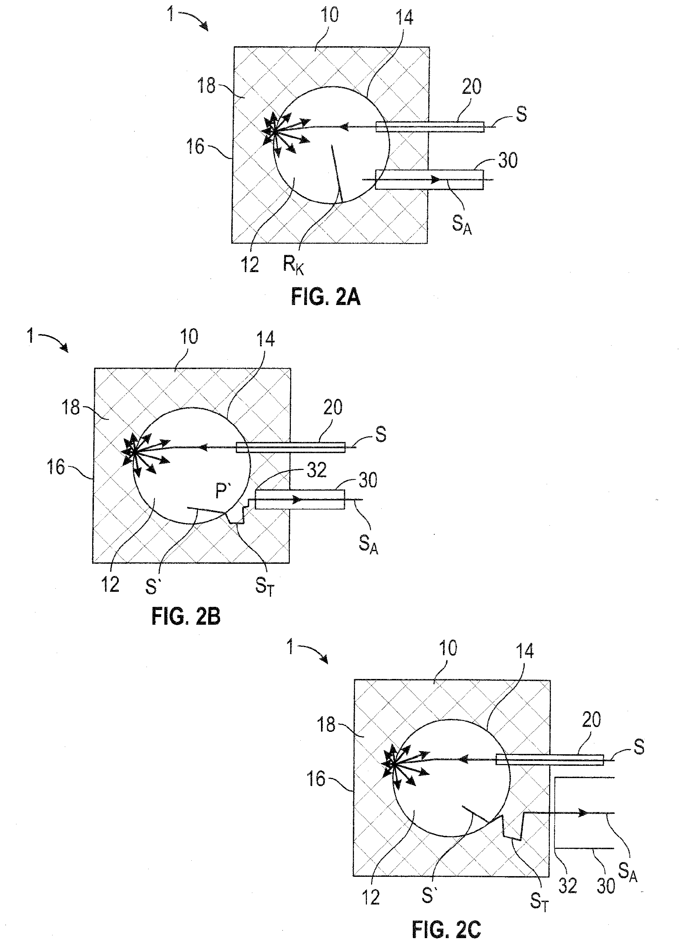

Die Figuren 2a bis 2c zeigen drei Möglichkeiten zur Anordnung der Auskoppeleinrichtung 30 für eine Gaszelle 1 mit einer Kavität 12 in Form einer Hohlkugel.

Diese Möglichkeiten sind jedoch nicht auf die Kavität in der Form einer Hohlkugel beschränkt und können für eine beliebige Form einer Kavität verwendet werden.

Fig. 2a zeigt die in Fig. 1 dargestellte erste Ausführungsform der Erfindung. Wie im Zusammenhang mit Fig. 1 erläutert wurde, erstrecken sich sowohl die Einkoppeleinrichtung 20 als auch die Auskoppeleinrichtung 30 (beispielsweise in Form von Lichtleitern, insbesondere optischer Fasern) von der Aussenseite der Gaszelle 1 aus durch den porösen Werkstoff hindurch bis in die Kavität 12 hinein. Bei dieser Anordnung der Einkoppel- und Auskoppeleinrichtung 20, 30 können die folgenden Probleme auftreten:

Es gibt einen Anteil des austretenden Strahlenbündels $S_A$, der nach Eintritt in die Kavität nur an der reflektierenden Oberfläche reflektiert wurde. Dieser Anteil des Strahlenbündels hat somit den porösen Werkstoff nicht durchlaufen. Dies führt zu einer Verringerung der erreichbaren optischen Weglänge.

Weiter verringern die Einkoppel- und Auskoppeleinrichtung 20, 30 sowohl den Bereich der inneren Oberfläche 14, an der die elektromagnetische Strahlung reflektiert werden kann, als auch das Volumen des porösen Werkstoffs, in dem die elektromagnetische Strahlung reflektiert werden kann.

Eine Lösung dieser Probleme ist in Fig. 2b gezeigt. Die Auskoppeleinrichtung 30 erreicht dabei die Kavität 12 nicht, sondern endet im porösen Werkstoff. Um durch die Auskoppeleinrichtung 30 ausgekoppelt zu werden, muss die elektromagnetische Strahlung also zumindest den Bereich zwischen der inneren Oberfläche 14 der Kavität 12 und dem Eintrittsende 32 der Auskoppeleinrichtung 30 zurücklegen, um aus der Gaszelle 1 ausgekoppelt zu werden (siehe den Verlauf des Strahls S', welcher am Punkt P' in den porösen Werkstoff transmittiert wird und als transmittierter Strahl $S_T$ in den Lichtleiter eintritt). Dabei läuft die Strahlung durch den porösen Werkstoff und erhält somit eine zusätzliche Weglängenverlängerung. Die Auskoppeleinrichtung 30 koppelt somit die das austretende Strahlenbündel $S_A$ bildende elektromagnetische Strahlung aus dem den porösen Werkstoff aufweisenden Bereich 18 des Körpers 10 aus.

Durch die in Fig. 2c gezeigte Abwandlung kann eine weitere Vergrösserung der in Fig. 2b gezeigten Wirkung erreicht werden. Hier ist die Auskoppeleinrichtung 30 vollständig ausserhalb des Körpers 10 angeordnet. Der Abstand des Eintrittsendes 32 der Auskoppeleinrichtung 30 von der Kavität 12 muss aber dabei klein genug sein, um ein ausreichendes Signal zu erhalten. Im Falle eines Lichtleiters kann durch eine Vergrösserung des Durchmessers des Lichtleiters eine Verbesserung des Signal-Rausch-Verhältnisses erreicht werden.

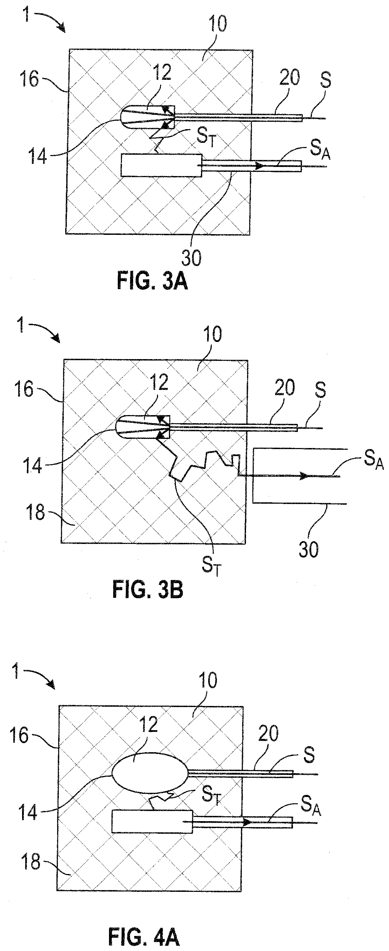

Die Figuren 3a und 3b zeigen eine Schnittansicht einer zweiten Ausführungsform einer erfindungsgemässen Gaszelle 1. Die Kavität 12 weist dabei eine konvexe Form auf, die jedoch nicht kugelförmig ist. In der in Fig. 3a gezeigten Ausführungsform ist die Auskoppeleinrichtung 30 in einem Abstand von der Kavität 12 in dem den porösen Werkstoff aufweisenden Bereich 18 des Körpers 10 angeordnet. Somit erhält man in jedem Fall eine durch die Streuung im porösen Werkstoff bedingte Weglängenverlängerung.

Fig. 3b zeigt eine Abwandlung der in Fig. 3a gezeigten Ausführungsform. Die Auskoppeleinrichtung 30, beispielsweise ein Lichtleiter, ist dabei vollständig ausserhalb der Gaszelle 1 angeordnet. Somit erhält man einen besonders grossen Anteil von im porösen Werkstoff reflektierter Strahlung (siehe Strahl $S_T$).

Fig. 4a zeigt eine Schnittansicht einer dritten Ausführungsform einer erfindungsgemässen Gaszelle 1. Die Kavität 12 weist dabei die Form eines Ellipsoids auf. Die Einkoppeleinrichtung 20 steht mit der Kavität 12 in Verbindung. Die Auskoppeleinrichtung 30 ist von der Kavität 12 beabstandet in dem den porösen Werkstoff aufweisenden Bereich 18 des Körpers 10 angeordnet. Die durch die Auskoppeleinrichtung 30 aus der Gaszelle 1 ausgekoppelte Strahlung ist somit in jedem Fall durch den porösen Werkstoff gelaufen (siehe Strahl $S_T$).

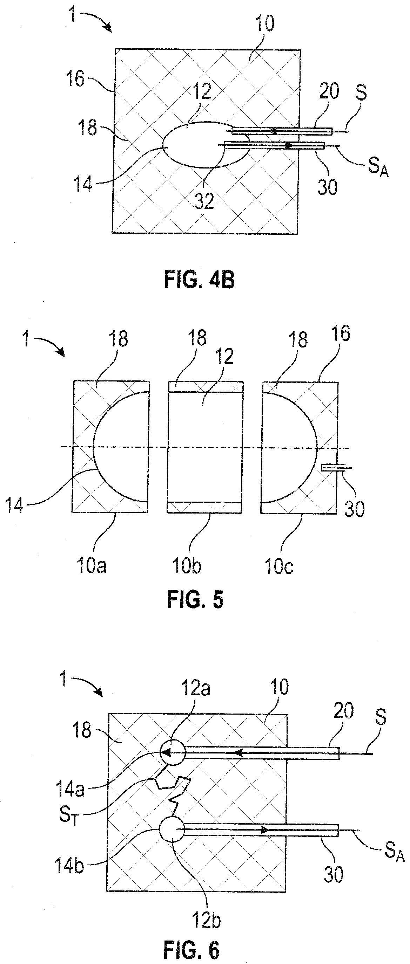

Fig. 4b zeigt eine Abwandlung der in Fig. 4a gezeigten dritten Ausführungsform. Die Auskoppeleinrichtung 30 ist dabei derart angeordnet, dass das Eintrittsende 32 im Brennpunkt des Ellipsoids angeordnet ist.

Fig. 5a zeigt eine Schnittansicht von Bestandteilen einer vierten Ausführungsform einer erfindungsgemässen Gaszelle 1. Der Körper 10 der Gaszelle 1 besteht dabei aus drei Teilen, einem linken Teil 10a, einem mittleren Teil 10b und einem rechten Teil 10c. In den Teilen 10a und 10c ist jeweils eine Hohlkugel ausgespart. In dem mittleren Teil 10b ist ein zylinderförmiger Abschnitt ausgespart. Diese Aussparungen können durch ein Fräsen in einem keramischen Körper erzeugt werden. Die Teile 10a, 10b und 10c werden dann zusammengesetzt und bilden gemeinsam den Körper 10, in dem die Kavität 12 ausgebildet ist.

Fig. 6 zeigt eine Schnittansicht einer fünften Ausführungsform einer erfindungsgemässen Gaszelle 1. In dem Körper 10 sind zwei voneinander getrennte Kavitäten 12a und 12b vorgesehen, die in der in Fig. 6 gezeigten Darstellung die Form einer Hohlkugel aufweisen. Die Einkoppeleinrichtung 20 steht mit der Kavität 12a in Verbindung, so dass elektromagnetische Strahlung durch die Einkoppeleinrichtung 20 in die Kavität 12a eingekoppelt werden kann. Die Auskoppeleinrichtung 30 steht mit der Kavität 12b in Verbindung. Damit die Strahlung durch die Auskoppeleinrichtung 30 ausgekoppelt werden kann, muss sie von der ersten Kavität 12a durch den porösen Werkstoff hindurch in die zweite Kavität 12b gelangen (Strahl $S_T$). Somit erhält man auch in dieser Ausführungsform auf jeden Fall einen Beitrag einer Weglängenverlängerung durch den Verlauf der Strahlung innerhalb des porösen Werkstoffs.

**LISTE DER BEZUGSZEICHEN**

1 Gaszelle
10 Körper
12 Kavität
14 innere Oberfläche
16 äussere Oberfläche
18 den porösen Werkstoff aufweisender Bereich
20 Einkoppeleinrichtung
30 Auskoppeleinrichtung
32 Eintrittsende

S eintretendes Strahlenbündel
$S_A$ austretendes Strahlenbündel
$L_O$ optische Weglänge
V Gaszellenvolumen

**Patentansprüche**

1. Gaszelle (1) für die spektroskopische, insbesondere absorptionsspektroskopische, Analyse eines Gases, bei der das Gas einem eintretenden Strahlenbündel (S) elektromagnetischer Strahlung ausgesetzt wird und ein von dem Gas austretendes Strahlenbündel ($S_A$) elektromagnetischer Strahlung zur Bildung eines Messsignals erfasst wird, wobei die Gaszelle (1)

   einen Körper (10) aus einem porösen, die elektromagnetische Strahlung streuenden Werkstoff, und
   eine Einkoppeleinrichtung (20) zum Einkoppeln des eintretenden Strahlenbündels (S) in die Gaszelle (1) und eine Auskoppeleinrichtung (30) zum Auskoppeln des austretenden Strahlenbündels ($S_A$) aus der Gaszelle (1) aufweist, **dadurch gekennzeichnet, dass**
   in dem Körper (10) eine werkstofffreie Kavität (12) ausgebildet ist, die von einer innerhalb des Werkstoffs verlaufenden, die elektromagnetische Strahlung sowohl diffus reflektierenden als auch transmittierenden inneren Oberfläche (14) umschlossen ist.

2. Gaszelle (1) gemäss Anspruch 1, wobei der Werkstoff einen porösen keramischen Werkstoff aufweist, in dem die Kavität (12) ausgebildet ist.

3. Gaszelle (1) gemäss Anspruch 1 oder 2, wobei die Porosität mindestens 25%, bevorzugt mindestens 30%, weiter bevorzugt mindestens 35% und höchstens 70%, bevorzugt höchstens 65% und weiter bevorzugt höchstens 60% beträgt.

4. Gaszelle (1) gemäss einem der vorangehenden Ansprüche, wobei die Kavität (12) die Form einer Hohlkugel mit Radius $R_K$ aufweist.

5. Gaszelle (1) gemäss Anspruch 4, wobei der Radius

$R_K$ der Hohlkugel unter Berücksichtigung des Signal-Rausch-Verhältnisses gewählt wird, und der Radius $R_K$ der Hohlkugel bevorzugt mindestens 2 mm, weiter bevorzugt mindestens 5 mm, noch weiter bevorzugt mindestens 10 mm und noch weiter bevorzugt mindestens 15 mm beträgt.

6. Gaszelle (1) gemäss einem der vorangehenden Ansprüche, wobei der Körper (10) eine äussere Oberfläche (16) aufweist, welche die innere Oberfläche (14) der Kavität (12) in einem Abstand umgibt, bei dem die an der äusseren Oberfläche (16) austretende Verluststrahlung kleiner als eine vorgegebene Verlustschranke ist, die vorzugsweise kleiner oder gleich 99% der Intensität des eintretenden Strahlenbündels (S), weiter bevorzugt kleiner oder gleich 95% der Intensität des eintretenden Strahlenbündels (S) und noch weiter bevorzugt kleiner oder gleich 90% der Intensität des eintretenden Strahlenbündels (S) ist.

7. Gaszelle (1) gemäss einem der vorangehenden Ansprüche, wobei das Verhältnis der von dem Strahlenbündel (S) in der Gaszelle (1) zurückgelegten optischen Weglänge ($L_O$) zu dem von der äusseren Oberfläche (16) des Körpers (10) eingeschlossenen Gaszellenvolumen (V) grösser oder gleich $10^5 \mathrm{m}^{-2}$ ist, vorzugsweise grösser oder gleich $2 \cdot 10^5 \mathrm{m}^{-2}$, weiter bevorzugt grösser oder gleich $3 \cdot 10^5 \mathrm{m}^{-2}$ ist.

8. Gaszelle (1) gemäss einem der vorangehenden Ansprüche, wobei die Einkoppeleinrichtung (20) zur divergierenden Einkopplung des eintretenden Strahlenbündels (S) in die Kavität (12) ausgebildet ist.

9. Gaszelle (1) gemäss einem der vorangehenden Ansprüche, wobei die Einkoppeleinrichtung (20) und/oder die Auskoppeleinrichtung (30) einen Lichtleiter aufweist.

10. Gaszelle (1) gemäss einem der vorangehenden Ansprüche, wobei die Einkoppeleinrichtung (20) zum Einkoppeln elektromagnetischer Strahlung des eintretenden Strahlenbündels (S) in die Kavität (12) ausgebildet ist und/oder die Auskoppeleinrichtung (30) zum Auskoppeln von das austretende Strahlenbündel ($S_A$) bildender elektromagnetischer Strahlung aus der Kavität (12) ausgebildet ist.

11. Gaszelle (1) gemäss einem der vorangehenden Ansprüche, wobei die Grösse des von der Einkoppel- und/oder Auskoppeleinrichtung (20, 30) in dem Körper (10) eingenommenen Bereichs unter Berücksichtigung der Absorbanz und/oder des Signal-Rausch-Verhältnisses gewählt wird.

12. Gaszelle (1) gemäss einem der vorangehenden Ansprüche, wobei die Einkoppeleinrichtung (20) zum Einkoppeln elektromagnetischer Strahlung des eintretenden Strahlenbündels (S) in den den porösen Werkstoff aufweisenden Bereich (18) des Körpers (10) ausgebildet ist und/oder die Auskoppeleinrichtung (30) zum Auskoppeln von das austretende Strahlenbündel ($S_A$) bildender elektromagnetischer Strahlung aus dem den porösen Werkstoff aufweisenden Bereich (18) des Körpers (10) ausgebildet ist.

13. Anordnung für die absorptionsspektroskopische Analyse eines Gases, aufweisend:

eine Gaszelle (1) nach einem der vorangehenden Ansprüche;
eine Quelle elektromagnetischer Strahlung zur Erzeugung des eintretenden Strahlenbündels (S); und
eine Detektoranordnung zur Erfassung des austretenden Strahlenbündels ($S_A$).

14. Anordnung gemäss Anspruch 13, wobei die Quelle elektromagnetischer Strahlung eine durchstimmbare Laserdiode aufweist.

**Claims**

1. A gas cell (1) for the spectroscopic, in particular absorption spectroscopic, analysis of a gas, in which the gas is exposed to an incoming beam (S) of electromagnetic radiation and a beam of electromagnetic radiation ($S_A$) emerging from the gas is detected to form a measurement signal, wherein the gas cell (1) comprises
a body (10) made of a porous material that scatters electromagnetic radiation, and
a coupling device (20) for coupling the incoming beam (S) into the gas cell (1) and a decoupling device (30) for decoupling the emerging beam ($S_A$) from the gas cell (1),
**characterized in that**
a material-free cavity (12) is formed in the body (10), which cavity is enclosed by an inner surface (14) which extends within the material and both diffusely reflects and transmits the electromagnetic radiation.

2. The gas cell (1) according to claim 1, wherein the material comprises a porous ceramic material in which the cavity (12) is formed.

3. The gas cell (1) according to claim 1 or 2, wherein the porosity is at least 25%, preferably at least 30%, more preferably at least 35% and at most 70%, preferably at most 65% and more preferably at most 60%.

4. The gas cell (1) according to any one of the preceding claims, wherein the cavity (12) has the shape of a hollow sphere with a radius $R_K$.

5. The gas cell (1) according to claim 4, wherein the radius $R_K$ of the hollow sphere is selected taking into account the signal-to-noise ratio, and the radius $R_K$ of the hollow sphere is preferably at least 2 mm, more preferably at least 5 mm, even more preferably at least 10 mm and more preferably at least 15 mm.

6. The gas cell (1) according to any one of the preceding claims, wherein the body (10) has an outer surface (16) which surrounds the inner surface (14) of the cavity (12) at a distance at which the radiation loss exiting at the outer surface (16) is less than a predetermined loss threshold, which is preferably less than or equal to 99% of the intensity of the incoming beam (S), more preferably less than or equal to 95% of the intensity of the incoming beam (S) and even more preferably less than or equal to 90% of the intensity of the incoming beam (S).

7. The gas cell (1) according to any one of the preceding claims, wherein the ratio of the optical path length ($L_o$) covered by the beam (S) in the gas cell (1) to the gas cell volume (V) enclosed by the outer surface (16) of the body (10) is greater than or equal to $10^5$m$^{-2}$, preferably greater than or equal to $2\times10^5$ m$^{-2}$, more preferably greater than or equal to $3\times10^5$ m$^{-2}$.

8. The gas cell (1) according to any one of the preceding claims, wherein the coupling device (20) for diverging coupling of the incoming beam (S) is formed into the cavity (12).

9. The gas cell (1) according to any one of the preceding claims, wherein the coupling device (20) and/or the decoupling device (30) comprises a light guide.

10. The gas cell (1) according to any one of the preceding claims, wherein the coupling device (20) is designed for coupling electromagnetic radiation of the incoming beam (S) into the cavity (12) and/or the decoupling device (30) is designed for decoupling the electromagnetic radiation forming the emerging beam ($S_A$) from the cavity (12).

11. The gas cell (1) according to any one of the preceding claims, wherein the size of the region occupied by the coupling and/or decoupling device (20, 30) in the body (10) is selected by taking into account the absorbance and/or the signal-to-noise ratio.

12. The gas cell (1) according to any one of the preceding claims, wherein the coupling device (20) is designed for coupling electromagnetic radiation of the incoming beam (S) into the region (18) of the body (10) having the porous material and/or the decoupling device (30) is designed for decoupling the electromagnetic radiation forming the emerging radiation beam ($S_A$) from the region (18) of the body (10) comprising the porous material.

13. An arrangement for the absorption spectroscopic analysis of a gas, comprising:
a gas cell (1) according to any one of the preceding claims,
a source of electromagnetic radiation for generating the incoming beam (S); and
a detector arrangement for detecting the emerging beam ($S_A$).

14. The arrangement according to claim 13, wherein the source of electromagnetic radiation comprises a tunable laser diode.

## Revendications

1. Cellule à gaz (1) pour l'analyse spectroscopique, en particulier spectroscopique d'absorption, d'un gaz, dans laquelle le gaz est exposé à un faisceau entrant (S) de rayonnement électromagnétique et un faisceau de rayonnement électromagnétique sortant ($S_A$) du gaz est détecté pour former un signal de mesure, dans laquelle la cellule à gaz (1) comprend un corps (10) fait d'une matière poreuse qui diffuse le rayonnement électromagnétique, et
un dispositif de couplage (20) pour coupler le faisceau entrant (S) dans la cellule à gaz (1) et un dispositif de découplage (30) pour découpler le faisceau sortant ($S_A$) de la cellule à gaz (1),
**caractérisée en ce que**
une cavité sans matière (12) est formée dans le corps (10), qui est entourée par une surface interne (14) qui s'étend à l'intérieur de la matière et qui réfléchit et transmet à la fois de manière diffuse le rayonnement électromagnétique.

2. Cellule à gaz (1) selon la revendication 1, dans laquelle la matière comprend une matière céramique poreuse dans laquelle la cavité (12) est formée.

3. Cellule à gaz (1) selon la revendication 1 ou 2, dans laquelle la porosité est d'au moins 25 %, de préférence d'au moins 30 %, de manière davantage préférée d'au moins 35 % et d'au plus 70 %, de préférence d'au plus 65 % et de manière davantage préférée d'au plus 60 %.

4. Cellule à gaz (1) selon l'une des revendications précédentes, dans laquelle la cavité (12) a la forme d'une sphère creuse de rayon $R_K$.

5. Cellule à gaz (1) selon la revendication 4, dans laquelle le rayon $R_K$ de la sphère creuse est choisi en tenant compte du rapport signal sur bruit, et le rayon $R_K$ de la sphère creuse est de préférence d'au moins 2 mm, de manière davantage préférée d'au moins 5 mm, de manière davantage préférée entre toutes d'au moins 10 mm et de manière davantage préférée entre toutes d'au moins 15 mm.

6.  Cellule à gaz (1) selon l'une des revendications précédentes, dans laquelle le corps (10) comprend une surface externe (16) qui entoure la surface interne (14) de la cavité (12) à une distance à laquelle la perte de rayonnement sortant de la surface externe (16) est inférieure à une limite de perte prédéterminée, qui est de préférence inférieure ou égale à 99 % de l'intensité du faisceau entrant (S), de manière davantage préférée inférieure ou égale à 95 % de l'intensité du faisceau entrant (S) et de manière davantage préférée entre toutes inférieure ou égale à 90 % de l'intensité du faisceau entrant (S).

7.  Cellule à gaz (1) selon l'une des revendications précédentes, dans laquelle le rapport entre la longueur de trajet optique ($L_o$) parcourue par le faisceau (S) dans la cellule à gaz (1) et le volume (V) de la cellule à gaz enfermé par la surface externe (16) du corps (10) est supérieur ou égal à $10^5 m^{-2}$, de préférence supérieur ou égal à $2 \cdot 10^5 m^{-2}$, de manière davantage préférée supérieur ou égal à $3 \cdot 10^5 m^{-2}$.

8.  Cellule à gaz (1) selon l'une des revendications précédentes, dans laquelle le dispositif de couplage (20) de couplage divergent du faisceau entrant (S) est formé dans la cavité (12).

9.  Cellule à gaz (1) selon l'une des revendications précédentes, dans laquelle le dispositif de couplage (20) et/ou le dispositif de découplage (30) comprend un guide de lumière.

10.  Cellule à gaz (1) selon l'une des revendications précédentes, dans laquelle le dispositif de couplage (20) est conçu pour coupler le rayonnement électromagnétique du faisceau entrant (S) dans la cavité (12) et/ou le dispositif de découplage (30) est conçu pour découpler le rayonnement électromagnétique formant le faisceau sortant ($S_A$) de la cavité (12).

11.  Cellule à gaz (1) selon l'une des revendications précédentes, dans laquelle la taille de la zone occupée par le dispositif de couplage et/ou de découplage (20, 30) dans le corps (10) est choisie en tenant compte de l'absorbance et/ou du rapport signal sur bruit.

12.  Cellule à gaz (1) selon l'une des revendications précédentes, dans laquelle le dispositif de couplage (20) est conçu pour coupler le rayonnement électromagnétique du faisceau entrant (S) dans la zone (18) du corps (10) présentant la matière poreuse et/ou le dispositif de découplage (30) est conçu pour découpler le rayonnement électromagnétique formant le faisceau sortant ($S_A$) hors de la zone (18) du corps (10) présentant la matière poreuse

13.  Ensemble pour l'analyse spectroscopique d'absorption d'un gaz, comprenant :
une cellule à gaz (1) selon l'une des revendications précédentes ;
une source de rayonnement électromagnétique pour générer le faisceau entrant (S) ; et
un ensemble détecteur pour détecter le faisceau sortant ($S_A$).

14.  Ensemble selon la revendication 13, dans lequel la source de rayonnement électromagnétique comprend une diode laser accordable.

FIG. 1

$S(R_1R_2T_1)$

$S(R_1R_2R_3)$

$S(R_1T_1T_2)$

$P_5$

$S$

$S_1(R_1)$

$S(R_1R_2)$

$S(R_1T_1)$

$S(T_1R_2)$

$P_4$

$P_3$

$S(R_1)$

$P_1$

$S(T_1T_2)$

$S(T_1)$

$S_2(R_1)$

$S(R_1T_1)$

$P_2$

$S(T_1)$

$12$

$14$

$S$

$20$

$S_A$

$30$

$10$

$16$

$18$

$1$

**FIG. 2A**

**FIG. 2B**

**FIG. 2C**

**FIG. 3A**

**FIG. 3B**

**FIG. 4A**

FIG. 4B

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018210583 A1
- EP 2520924 A1
- US 4709150 A

**In der Beschreibung aufgeführte Nicht-Patentliteratur**

- **J. HODGKINSON et al.** *Applied Optics,* 2009, vol. 48 (30
- **M. SJÖHOLM et al.** *Optics,* 2001, vol. 26, 16-18
- **L. MEI et al.** Pathlength Determination for Gas in Scattering Media Absorption Spectroscopy. *Sensors,* 2014, vol. 14 (3), 3871-3890